# EUROPÄISCHE PATENTSCHRIFT

(11) **EP 4 040 635 B1**
(45) Veröffentlichungstag und Bekanntmachung des Hinweises auf die Patenterteilung: **03.07.2024**
(21) Anmeldenummer: 22153567.7
(22) Anmeldetag: 27.01.2022
(51) Int. Cl.: B64C 1/00

(54) **STRUKTURBAUTEIL FÜR EIN FAHRZEUG UND BEFESTIGUNGSANORDNUNG**
STRUCTURAL COMPONENT OF AN AUTOMOBILE AND FIXING ATTACHMENT
COMPOSANT STRUCTURAL POUR UN VÉHICULE ET AGENCEMENT DE FIXATION

(30) Priorität: 08.02.2021 DE 102021102901
(43) Veröffentlichungstag der Anmeldung: 10.08.2022
(73) Patentinhaber: Airbus Operations GmbH, 21129 Hamburg (DE)
(72) Erfinder: Linde, Peter, 21128 Hamburg (DE); Hegenbart, Matthias, 21129 Hamburg (DE)

(56) Entgegenhaltungen:
- EP-A1- 3 222 514
- US-A1- 2015 061 380
- US-A1- 2018 015 705
- US-A1- 2021 037 645
- US-B1- 7 349 225
- US-B2- 10 414 358

## Beschreibung

Die vorliegende Erfindung betrifft ein Strukturbauteil für ein Fahrzeug, insbesondere ein Luft- oder Raumfahrzeug. Ferner betrifft die Erfindung eine Befestigungsanordnung mit derartigen Strukturbauteilen sowie ein Luft- oder Raumfahrzeug mit einer solchen Befestigungsanordnung.

Obwohl in vielfältigen Anwendungen einsetzbar, werden die vorliegende Erfindung sowie die ihr zugrunde liegende Problematik in Bezug auf Passagierflugzeuge näher erläutert. Die beschriebenen Verfahren und Vorrichtungen können jedoch ebenso in unterschiedlichen Fahrzeugen und in allen Bereichen der Transportindustrie, beispielsweise für Straßenfahrzeuge, für Schienenfahrzeuge, für Luftfahrzeuge oder für Wasserfahrzeuge eingesetzt werden.

In jüngerer Zeit wird unter anderem im Luftfahrtbereich zwecks Gewichtsreduzierung vermehrt vorgeschlagen, elektrische Energiespeicher in die Faserverbundstruktur eines Flugzeugs einzuarbeiten, beispielsweise indem elektrochemische Zellen aus funktionalen Mehrlagenlaminaten aufgebaut werden, die dann in den geschichteten Faserverbundaufbau der Flugzeugbauteile stoffschlüssig integriert werden. Für strukturelle Verbundbatterien, z.B. Lithium-lonen-Zellen, sind Kohlenstofffasern aufgrund ihrer mechanischen Eigenschaften und der leichten Einlagerung von Lithium-Ionen als Elektroden geeignet. Kohlenstofffasern haben eine hohe Steifigkeit und Festigkeit, die eine mechanische Verstärkung und eine günstige elektrische Leitfähigkeit für den Transport von Elektronen in und aus der Zelle bieten. Als Separator für den Transport von Ionen zwischen den Elektroden kann ein Polymer verwendet werden, um die Fasern zu binden und eine Verbundbatterie zu bilden. So beschreibt beispielsweise die Druckschrift EP 2 852 990 B1 die Herstellung und Verwendung derartiger Batteriezellen in unterschiedlichen strukturellen Bauteilen.

Im Zuge einer derartigen strukturellen Integration der Energieversorgung tritt weiterhin die Frage auf, wie die elektrische Energie durch die Fahrzeugstruktur hindurch zu den unterschiedlichen Verbrauchern transportiert werden kann. Gewöhnliche kabelgebundene Lösungen sind zwar prinzipiell relativ unkompliziert umsetzbar, allerdings wäre es wünschenswert den hierbei anfallenden hohen Montageaufwand zu vermindern und gleichzeitig Gewicht einzusparen.

Die US 2015/0061380 A1 offenbart in diesem Zusammenhang ein Fußbodensystem für ein Fahrzeug mit einem Fußbodenpanel, welches eine Ausnehmung aufweist, in der eine Primärspule einsetzbar ist. Diese in dem Fußbodenpanel eingesetzte Primärspule ist ausgebildet, drahtlos Energie zu übertragen.

Vor diesem Hintergrund liegt der vorliegenden Erfindung die Aufgabe zugrunde, vereinfachte Lösungen für die Übertragung von elektrischer Energie durch eine Fahrzeugstruktur zu finden.

Erfindungsgemäß wird diese Aufgabe gelöst durch ein Strukturbauteil mit den Merkmalen des Patentanspruchs 1, durch eine Befestigungsanordnung mit den Merkmalen des Patentanspruchs 9 und durch ein Luft- oder Raumfahrzeug mit den Merkmalen des Patentanspruchs 11.

Demgemäß ist ein Strukturbauteil für ein Fahrzeug, insbesondere ein Luft- oder Raumfahrzeug, vorgesehen. Das Strukturbauteil weist ein Faserverbundlaminat auf.

Das Faserverbundlaminat umfasst eine Leistungsübertragungslage, welche dazu ausgebildet ist, elektrische Energie drahtlos mittels eines elektromagnetischen Wechselfelds zu übertragen, und zwei Stromführungslagen, welche die Leistungsübertragungslage elektrisch kontaktieren. Die Leistungsübertragungslage ist direkt in dem Faserverbundlaminat integriert. Das Strukturbauteil umfasst weiterhin eine Steuerungseinrichtung, welche über die Stromführungslagen mit der Leistungsübertragungslage elektrisch gekoppelt und dazu ausgebildet ist, eine Übertragung von elektrischer Energie durch die Leistungsübertragungslage zu regeln.

Weiterhin ist eine Befestigungsanordnung vorgesehen. Die Befestigungsanordnung umfasst zwei erfindungsgemäße Strukturbauteile, wobei die Leistungsübertragungslagen der Strukturbauteile derart relativ zueinander angeordnet und ausgebildet sind, dass elektrische Energie über die Leistungsübertragungslagen zwischen den Strukturbauteilen übertragbar ist.

Ferner ist ein Luft- oder Raumfahrzeug mit einem erfindungsgemäßen Strukturbauteil oder einer erfindungsgemäßen Befestigungsanordnung vorgesehen.

Eine der vorliegenden Erfindung zugrunde liegende Idee besteht darin, die übliche Verkabelung der elektrischen Infrastruktur mit hohem Gewicht und Installationsvolumen und Installationsaufwand zu vermeiden, indem eine drahtlose Energie- bzw. Leistungsübertragung durch die Fahrzeugstruktur hindurch ermöglicht wird. Hierzu werden Leistungsübertragungslagen zur kontaktlosen Energieübertragung mittels elektromagnetischer Felder direkt mit in die faserverstärkte Laminatstruktur der strukturellen Komponenten des Fahrzeugs integriert. Beispielsweise können flache elektromagnetische Spulen in einzelne Lagen des Laminataufbaus eingebracht werden, wie sie dem Fachmann bereits aus anderen Anwendungen zur kontaktlosen bzw. drahtlosen Energieübertragung bekannt sind.

Konkret können sich diese Lagen dabei an oder nahe bei einer Oberfläche des entsprechenden Bauteils befinden, sodass die Strahlung möglichst verlustfrei aus dem Bauteil austreten kann. Die elektromagnetisch aktiven Bauelemente können hierbei in eine elektrisch neutrale und für elektromagnetische Wellen durchlässige Faserverbundstruktur und/oder ein entsprechendes Matrixmaterial eingebettet sein.

Beispielsweise kann sich die Leistungsübertragungslage unterhalb einer mehr oder weniger dünnen isolierenden, schützenden und/oder verstärkenden Außenschicht aus Verbundmaterial befinden, die für elektromagnetische Wellen durchlässig ist. Werden nun jeweils zwei solcher Bauteile derart relativ zueinander positioniert, dass die jeweiligen Leistungsübertragungslagen einander gegenüberliegen, so kann elektrische Energie drahtlos zwischen den beiden Bauteilen übertragen werden. Hierbei können die beiden Bauteile mehr oder weniger weit voneinander beabstandet sein, da bekannte Lösungen zur kontaktlosen Energieübertragung mit Abständen von wenigen Zentimetern bis zu mehreren Metern umsetzbar sind. Es sind jedoch ebenso Ausführungen möglich, bei welchen die beiden Bauteile an einer Oberfläche unmittelbar an einander befestigt sind, insbesondere im Umfeld der jeweiligen Leistungsübertragungslagen.

Prinzipiell ist es somit möglich, eine Vielzahl derartiger Bauteile elektrisch miteinander zu koppeln und damit eine elektrische Infrastruktur durch die Fahrzeugstruktur hindurch zu realisieren, z.B. eine Rumpfstruktur eines Flugzeugs mit Hautfeld, Spanten, Stringern, Querträgern usw., ohne dass Kabel, Leitungen, Steckverbinder und dergleichen verlegt bzw. installiert werden müssen. Hierdurch kann in erheblichem Maße Gewicht und Installationsaufwand eingespart werden.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das Strukturbauteil weiterhin einen elektrischen Energiespeicher umfassen. Der elektrische Energiespeicher kann mit der Leistungsübertragungslage elektrisch gekoppelt und dazu ausgebildet sein, elektrische Energie in wiederaufladbarer Weise zu speichern.

In dieser Weiterbildung wird somit nicht nur eine Infrastruktur zur elektrischen Energieübertragung, sondern ebenfalls ein wiederaufladbarer Energiespeicher direkt mit in das Strukturbauteil integriert.

In einem konkreten Beispiel kann der elektrische Energiespeicher eine Batterie umfassen. Hierbei kann es sich beispielsweise um eine Lithium-Ionen-Batterie bzw. eine Lithium-Ionen-Zelle oder eine andere übliche Batterietechnologie handeln.

Eine Batterie im Sinne der Erfindung ist hierbei ein allgemeines wiederaufladbares elektrisches Speicherelement auf elektrochemischer Basis. Hierbei kann es sich um eine Sekundärzelle handeln, d.h. ein einzelnes Speicherelement im Sinne eines Sekundärelements, einer Akkumulatorzelle, einer Akkuzelle, einer Batteriezelle oder dergleichen. Prinzipiell umfassen Batterien gemäß der Erfindung jedoch ebenso zusammengeschaltete Sekundärzellen und/oder zusammengeschaltete Speicherelemente, d.h. eine Batterie aus Sekundärzellen. Batterien im Sinne der Erfindung umfassen insbesondere Akkumulatoren, z.B. Lithium-Ionen-Akkumulatoren. Das Strukturbauteil kann hierbei auch zur Aufnahme von gewöhnlichen zylinderförmigen Batterien bzw. Batteriezellen ausgebildet sein. Grundsätzlich sind dabei jedoch ebenso Batterie- bzw. Zellvarianten mit anderen Geometrien möglich, z.B. prismatische Batteriezellen.

In einem anderen konkreten Beispiel kann der elektrische Energiespeicher einen Superkondensator umfassen. Superkondensatoren sind elektrochemische Kondensatoren und zeichnen sich unter anderem dadurch aus, dass sie ggf. sehr schnell auf- und insbesondere entladen werden können. Anders formuliert weisen Superkondensatoren eine erheblich größere Leistungsdichte bei grundsätzlich geringerer Energiedichte als gewöhnliche elektrochemische Batterien auf.

Dem Fachmann wird sich hierbei unmittelbar erschließen, dass darüber hinaus prinzipiell jede zur Energiespeicherung geeignete Technologie verwendet werden kann, welche elektrisch Energie effizient speichert.

Gemäß einer Weiterbildung kann der elektrische Energiespeicher dazu ausgebildet sein, elektrische Energie von der Leistungsübertragungslage zu empfangen und gespeicherte elektrische Energie bedarfsweise für die Leistungsübertragungslage bereitzustellen.

Es wird somit eine strukturell integrierte drahtlose Energieversorgung bereitgestellt. Der Energiespeicher kann mit Hilfe der Leistungsübertragungslage auf- und entladen werden. Im Prinzip ermöglicht es die Erfindung eine Primärstruktur eines Fahrzeugs, z.B. einen Rumpf und/oder einen Flügel eines Flugzeugs, als strukturellen Energiespeicher auszubilden, z.B. zur Versorgung von elektrischen Verbrauchern an Bord des Fahrzeugs und/oder zur Realisierung eines elektrischen Antriebs.

Gemäß einer Weiterbildung kann der elektrische Energiespeicher als struktureller Energiespeicher in das Faserverbundlaminat integriert sein.

Sowohl Batterien als auch (Super-) Kondensatoren können als Energiespeicher strukturell in Faserverbundstrukturen integriert werden. Im Prinzip ist es hierbei sogar möglich diese Technologien zusammen mit Leistungsübertragungsschichten in dieselbe Faserverbundstruktur einzuarbeiten.

Gemäß einer Weiterbildung kann der elektrische Energiespeicher eine mehrlagige elektro-chemische Faserverbundbatterie umfassen, welche als Bestandteil des Faserverbundlaminats gefertigt ist.

Beispielsweise kann ein entsprechendes Mehrlagenlaminat aus Verstärkungsfasern (z.B. Kohlenstofffasern, Glasfasern usw.), einem Matrixmaterial (Kunstharz, Elektrolytpolymer etc.) und funktionalen Elementen (Spulen, Kontakten, Elektroden, Leitungsbahnen usw.) bereitgestellt werden, welches durch Beaufschlagung mit Druck und Temperatur zu einer rigiden Struktur ausgehärtet wird, wobei Stromführungslagen des Laminataufbaus als elektrische Anschlüsse fungieren können. Somit kann sowohl der Energiespeicher als auch die Leistungsübertragungslage bereits während der strukturellen Fertigung des Strukturbauteils in dieses eingearbeitet und gemeinsam mit diesem zu einer einstückigen Struktur ausgehärtet werden.

Gemäß einer Weiterbildung kann die Steuerungseinrichtung dazu ausgebildet sein, Auf- und Entladung des elektrischen Energiespeichers zu regeln.

Die Steuereinrichtung kann somit die elektrische Infrastruktur des Strukturbauteils verwalten, einschließlich der Auf- und Entladung des Energiespeichers sowie der Energieübertragung von und zu anderen Komponenten des Fahrzeugs.

Gemäß einer Weiterbildung kann die Steuerungseinrichtung als Mikrocontroller in das Faserverbundlaminat integriert sein.

Der Mikrocontroller kann hierbei das drahtlose Energieübertragungssystem steuern, um Energie zu laden, zu entladen und/oder zu übertragen, und zwar in, aus und zwischen dem oder den in die Struktur integrierten strukturellen Batterien und Energieempfangs- und Energieversorgungseinheiten.

Gemäß einer Weiterbildung kann das Faserverbundlaminat mehrere strukturell stabilisierende Faserverstärkungslagen umfassen.

Hierbei können zumindest im Bereich der elektrischen Infrastruktur Materialien mit vernachlässigbarer elektrischer Leitfähigkeit verwenden werden, z.B. Glasfasern als Verstärkungsfasern sowie ein Kunstharz als Matrixmaterial.

Gemäß einer Weiterbildung können die zwei Strukturbauteile stoffschlüssig im Bereich der Leistungsübertragungslagen aneinander gefügt sein.

Beispielsweise können die beiden Strukturbauteile miteinander verklebt sein, sodass Nietverbindungen oder Bohrungen oder dergleichen im Bereich der elektrischen Infrastruktur umgangen werden. Abseits der elektrischen Infrastruktur aus Energiespeicher und Leistungsübertragung/Transmitter können die Strukturbauteile natürlich dennoch (zusätzlich) miteinander vernietet oder anderweitig aneinander gefügt sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische Schnittansicht eines Strukturbauteils gemäß einer Ausführungsform der Erfindung;
- Fig. 2: schematische perspektivische Schnittansicht einer Befestigungsanordnung mit dem Strukturbauteil aus Fig. 1; und
- Fig. 3: schematische Seitenansicht eines Luftfahrzeugs mit der Befestigungsanordnung aus Fig. 2.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

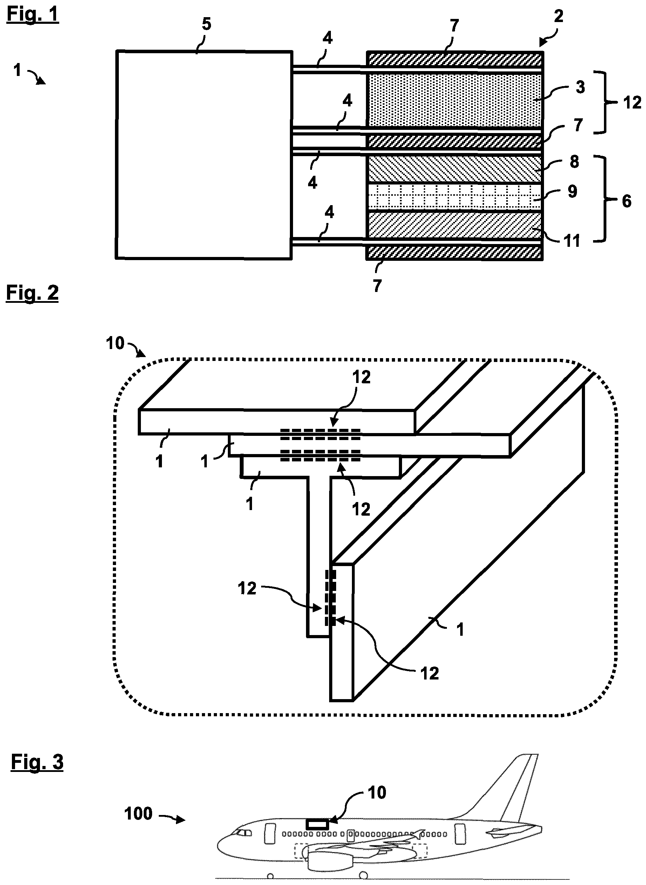

Figur 1 zeigt eine schematische Schnittansicht eines Strukturbauteils 1 gemäß einer Ausführungsform der Erfindung. Fig. 2 zeigt die Verwendung eines solchen Strukturbauteils 1 in einer Befestigungsanordnung 10 aus mehreren Strukturbauteilen 1. Fig. 3 ist eine Seitenansicht des entsprechenden Luftfahrzeugs 100, z.B. ein Passagierflugzeug, mit einer derartigen Befestigungsanordnung 10.

Bei dem bzw. den Strukturbauteilen 1 kann es sich insbesondere um strukturelle Bauteile einer Primärstruktur des Luftfahrzeugs 100 handeln wie beispielsweise tragende, verbindende und/oder versteifende Elemente eines Rumpfes und/oder eines Flügelholms, z.B. ein Spant, ein Stringer, ein Querträger, ein Balken, ein Hautfeldsegment, ein Verbindungselement oder dergleichen. Auch wenn mit Bezug auf Fig. 2 konkrete Ausgestaltungen von Strukturbauteilen 1 dargestellt sind, sind diese keineswegs auf die gezeigten Ausführungsbeispiele eingeschränkt. Vielmehr sind unterschiedlichste geometrische gekrümmte oder nicht gekrümmte Formen denkbar, wie sie dem Fachmann aus dem Fahrzeugbau bekannt sind. Rein beispielhaft können die Strukturbauteile 1 stabförmig, ggf. mit einem bestimmten Querprofil wie L, T, Z, Ω etc., oder plattenförmig/flach ausgebildet sein. Grundsätzlich können Strukturbauteile 1, wie sie im Folgenden beschrieben werden, nicht nur in Flugzeugen, sondern auch in allgemeinen Luftfahrzeugen oder anderen Anwendungen aus der Transportindustrie, z.B. in Land-, Wasser- oder Schienenfahrzeugen, eingesetzt werden.

Das Strukturbauteil 1 der Fig. 1 ist als Faserverbundlaminat 2 aus einer Vielzahl von Faserverbundlagen gefertigt, wie es dem Fachmann grundsätzlich aus dem Flugzeugbau zur Fertigung von strukturellen Bauteilen bekannt ist. Anders ausgedrückt bilden die Lagen dieses Laminataufbaus die tragende Struktur des Bauteils 1.

Hierzu umfasst das Faserverbundlaminat 2 in diesem beispielhaften Fall insbesondere mehrere Faserverstärkungslagen 7 aus einem Glasfaserverbundmaterial. Diese Lagen wirken einerseits strukturell stabilisierend. Andererseits sind speziell Glasfasern elektrisch isolierend und können in Kombination mit einem entsprechenden Matrixmaterial elektrisch leitfähige bzw. funktionale Schichten des Faserverbundlaminats 2, wie sie im Folgenden beschrieben werden, voneinander trennen. Dabei können diese Faserverstärkungslagen 7 bei Verwendung eines geeigneten Matrixmaterials (z.B. Kunstharz) insbesondere durchlässig für elektromagnetische Strahlung sein, was für den weiter unten beschriebenen Energieübertragungsmechanismus vorteilhaft ist.

Das Faserverbundlaminat 2 umfasst weiterhin mehrere Schichten/Lagen, die als elektrischer Transmitter 12 fungieren. Konkret weist das Faserverbundlaminat 2 hierzu eine Leistungsübertragungslage 3 auf, in welche eine oder mehrere elektromagnetische Spulen integriert sind und welche dazu ausgebildet ist, elektrische Energie drahtlos mittels eines elektromagnetischen Wechselfelds zu übertragen. Weiterhin umfasst das Faserverbundlaminat 2 oberhalb und unterhalb der Leistungsübertragungslage 3 jeweils eine Stromführungslage 4, die jeweils als elektrischer Kontakt für die Leistungsübertragungslage 3 fungieren und diese im Zusammenspiel mit einem Mikrocontroller verbinden, der als Steuerungseinrichtung 5 dazu ausgebildet ist, eine Übertragung von elektrischer Energie durch die Leistungsübertragungslage 3 zu regeln. Ganz konkret kann die Steuerungseinrichtung 5 die Leistungsübertragungslage 3 dazu veranlassen, elektrische Leistung zu einem externen Empfänger zu übermitteln und von diesem empfangene elektrische Energie zu nutzen.

Im Ergebnis wird somit ein Strukturbauteil 1 bereitgestellt, welches ohne zusätzliche Kabel, Leitungen, Steckverbindungen Anschlüsse oder dergleichen dazu in der Lage ist, elektrische Energie zu transportieren. Anders formuliert wird eine Energieübertragungseinrichtung samt Steuer- und Kontrollinstanz in das Strukturbauteil 1 integriert. Werden nun wie in Fig. 2 beispielhaft gezeigt, mehrere solcher Strukturbauteile 1 über ihre elektrischen Transmitter 12 miteinander gekoppelt, so kann einen elektrische Infrastruktur völlig ohne Verkabelungen unmittelbar in die tragende Struktur des Luftfahrzeugs 100 integriert werden. Hierzu können die Leistungsübertragungslagen 3 der Strukturbauteile 1 derart relativ zueinander angeordnet und ausgebildet werden, dass elektrische Energie über die Leistungsübertragungslagen 3 zwischen den Strukturbauteilen 1 übertragbar ist.

Wie sich dem Fachmann unmittelbar erschließen wird, können mittels derartiger Leistungsübertragungslagen 3 nicht nur elektrische Energie, sondern ebenfalls Signale wie Steuersignale oder allgemeine Daten ausgetauscht werden. Die Strukturbauteile 1 können somit grundsätzlich sowohl zur Energieübertragung, als auch zur Datenübertragung verwendet werden.

In dem Beispiel der Fig. 2 ist ein Überlappstoß zweier plattenförmiger Strukturbauteile 1 zu sehen (oben in Fig. 2), auf den ein stabförmiges Strukturbauteil 1 mit T-Profil senkrecht aufgesetzt ist. An dieses Strukturbauteil 1 ist wiederum ein weiteres stabförmiges Strukturbauteil 1 überlappend angebunden. Alle diese Strukturbauteile 1 sind jeweils mit einem oder mehreren der oben beschriebenen elektrischen Transmitter 12 ausgebildet, wobei zwei Bauteile jeweils mit gegenüberliegenden Transmittern 12 aneinander gefügt sind, sodass jeweils paarweise elektrische Energie drahtlos ausgetauscht werden kann. Insbesondere können die Strukturbauteile 1 im Bereich der Transmitter 12 miteinander verklebt sein, d.h. stoffschlüssig miteinander verbunden sein. Nieten oder andere strukturbeeinflussende Verbindungen können jedoch außerhalb dieser Bereiche ergänzend verwendet werden. Es sollte hierbei klar sein, dass sich die Leistungsübertragungslagen 3 nicht notwendigerweise über die gesamte Längs- und/oder Querausdehnung der Strukturbauteil 1 erstrecken müssen, sondern lediglich bereichsweise in diesen vorgesehen sein können. Es können somit bestimmte flächige Kontaktbereiche zur elektrischen Kontaktierung an den Oberflächen der Bauteile 1 geschaffen werden.

Optional können die Strukturbauteile 1 darüber hinaus wie in Fig. 1 beispielhaft gezeigt auch mit einem integrierten elektrischen Energiespeicher 6 ausgebildet sein, welcher elektrische Energie in wiederaufladbarer Weise speichert. Der elektrische Energiespeicher 6 ist über entsprechende Stromführungslagen 4 sowohl an die Steuerungseinrichtung 5, als auch an den elektrischen Transmitter 12 gekoppelt, sodass von der Leistungsübertragungslage 3 empfangene Energie zur Aufladung des elektrischen Energiespeichers 6 genutzt werden kann und ebenso von diesem bedarfsweise für die Leistungsübertragungslage 3 bereitgestellt werden kann.

Der elektrische Energiespeicher 6 ist hierbei als mehrlagige elektro-chemische Faserverbundbatterie strukturell in das Faserverbundlaminat 2 integriert und zusammen mit diesem gefertigt. Dies bedeutet, dass die tragende Struktur des Luftfahrzeugs 100 nicht nur Energie speichern kann, sondern diese auch abrufen, transportieren und zur Nutzung zur Verfügung stellen kann, z.B. für elektrische Verbraucher in einer Passagierkabine, in einem Cockpit oder in einem Frachtraum des Luftfahrzuges 100 und/oder für einen elektrischen Antrieb des Luftfahrzeugs 100.

Wie bereits erwähnt, ist der elektrische Energiespeicher 6 in diesem Beispiel als funktionales Faserverbundlaminat ausgebildet. Prinzipiell ist es natürlich ebenso möglich, eine strukturelle Integration eines Energiespeichers in Form eines 3D-Aufbaus oder auf Basis herkömmlicher Batteriezellen zu realisieren.

In den letzten Jahrzehnten haben jedoch insbesondere strukturelle Anwendungen mit laminierten Verbundwerkstoffen im Bereich der Luft- und Raumfahrt zugenommen. Laminierte Verbundstoffstrukturen bestehen hierbei aus Schichten von orthotropen Materialien. Vorteile des Einsatzes von faserverstärkten Verbundwerkstoffen gegenüber konventionellen Materialien sind u.a. geringeres Eigengewicht, hohe spezifische Festigkeit, ausgezeichnete Ermüdungsfestigkeit, hohes Steifigkeits-zu-Gewichtsverhältnis und Designflexibilität.

Strukturelle Batterien können beispielsweise Kohlenstofffasern als Anode (z.B. eingebettet in ein geeignetes Bindungspolymer), eine Kathode aus beschichteten Kohlenstofffasern (z.B. LiFePO₄ beschichtet, d.h. mit Partikeln auf Lithium-Metalloxidbasis, und ebenfalls eingebettet in ein entsprechendes strukturelles Elektrolytpolymer), einen Separator mit eingebetteten Glasfasern zur Trennung der Elektroden und zum Weitertransport der Ionen, ein geeignetes Elektrolytmaterial (z.B. ein polymerisiertes Vinylesterderivat eines Poly(ethylenglykol)-Elektrolyten) sowie Stromkollektoren bzw. -Stromabnehmer zur Anbindung an einen externen Stromkreis umfassen (z.B. additiv aufgetragene Lagen/Beschichtungen aus einem Metallmaterial). Aufgrund der integrierten Fähigkeit, Energie zu speichern, bietet eine derartige Materialkombination erhebliche Gewichtseinsparungen auf Systemebene. Für strukturelle Verbundbatterien sind Kohlenstofffasern aufgrund ihrer mechanischen Eigenschaften und der leichten Einlagerung von Lithium-Ionen als Elektroden besonders geeignet. Kohlenstofffasern haben eine hohe Steifigkeit und Festigkeit, die eine mechanische Verstärkung und eine günstige elektrische Leitfähigkeit für den Transport von Elektronen in und aus der Batterie (-zelle) bieten.

In dem Beispiel der Fig. 1 umfasst die Batterie 6 einen gestapelten Aufbau mit einer zuunterst liegenden Anodenschicht 11, z.B. Kohlenstofffasern eingebettet in einem strukturellen Festkörperelektrolyten (z.B. mit Lithium-Ionen angereichertes Kunstharz). Auf der Anodenschicht 11 befindet sich eine Glasfasern enthaltende Elektrolytlage 9. Auf dieser befindet sich wiederum eine Kathodenlage mit Kohlenstofffasern (z.B. LiFePO₄ beschichtet und ebenfalls eingebettet in einen Festkörperelektrolyten). Die beiden Elektrodenlagen 8, 11 werden hierbei von Stromführungslagen 4 kontaktiert, die beispielsweise ein Metall aufweisen können, z.B. Aluminium, Kupferfolie etc.

Es versteht sich hierbei, dass die obige konkrete Ausführung der Energiespeicher rein beispielhaft ist und der Fachmann alternativ oder zusätzlich sämtliche bekannte technische Lösungen zur Umsetzung einer strukturell integrierten Energiequelle zur Anwendung bringen kann.

Insgesamt führt dies somit dazu, dass die Strukturbauteile 1 des Luftfahrzeugs 100 mit integrierten Energiespeicherfähigkeiten (Strukturbatterien) versehen werden können, ohne dass eine Verkabelung oder Anschlüsse benötigt werden, da dies über die integrierte Energieübertragung sowie geeignete Steuer- und Kontrolleinrichtungen geregelt werden kann. Damit wird eine strukturelle Energiespeicherung und -versorgung mit schneller Lade- und Entlademöglichkeit und drahtloser Energieübertragung ohne Anschlüsse, Leitungen, Kabelbäume und ohne dem damit für gewöhnlich verbundenen Installationsaufwand bei der Montage bereitgestellt.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet.

Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Strukturbauteil
- 2: Faserverbundlaminat
- 3: Leistungsübertragungslage
- 4: Stromführungslage
- 5: Steuerungseinrichtung
- 6: Energiespeicher
- 7: Faserverstärkungslage
- 8: Kathodenlage
- 9: Elektrolytlage
- 10: Befestigungsanordnung
- 11: Anodenlage
- 12: Transmitter
- 100: Luftfahrzeug

## Patentansprüche

1. Strukturbauteil (1) für ein Fahrzeug, insbesondere ein Luft- oder Raumfahrzeug (100), wobei das Strukturbauteil (1) ein Faserverbundlaminat (2) aufweist, welches umfasst:
eine Leistungsübertragungslage (3), welche dazu ausgebildet ist, elektrische Energie drahtlos mittels eines elektromagnetischen Wechselfelds zu übertragen; und
zwei Stromführungslagen (4), welche die Leistungsübertragungslage (3) elektrisch kontaktieren;
wobei das Strukturbauteil (1) weiterhin umfasst:
eine Steuerungseinrichtung (5), welche über die Stromführungslagen (4) mit der Leistungsübertragungslage (3) elektrisch gekoppelt und dazu ausgebildet ist, eine Übertragung von elektrischer Energie durch die Leistungsübertragungslage (3) zu regeln, **dadurch gekennzeichnet, dass** die Leistungsübertragungslage (3) direkt mit in das Faserverbundlaminat (2) integriert ist.

2. Strukturbauteil (1) nach Anspruch 1, weiterhin mit: einem elektrischen Energiespeicher (6), welcher mit der Leistungsübertragungslage (3) elektrisch gekoppelt und dazu ausgebildet ist, elektrische Energie in wiederaufladbarer Weise zu speichern.

3. Strukturbauteil (1) nach Anspruch 2, wobei der elektrische Energiespeicher (6) dazu ausgebildet ist, elektrische Energie von der Leistungsübertragungslage (3) zu empfangen und gespeicherte elektrische Energie bedarfsweise für die Leistungsübertragungslage (3) bereitzustellen.

4. Strukturbauteil (1) nach Anspruch 2 oder 3, wobei der elektrische Energiespeicher (6) als struktureller Energiespeicher in das Faserverbundlaminat (2) integriert ist.

5. Strukturbauteil (1) nach Anspruch 4, wobei der elektrische Energiespeicher (6) eine mehrlagige elektro-chemische Faserverbundbatterie umfasst, welche als Bestandteil des Faserverbundlaminats (2) gefertigt ist.

6. Strukturbauteil (1) nach einem der Ansprüche 2 bis 5, wobei die Steuerungseinrichtung (5) dazu ausgebildet ist, Auf- und Entladung des elektrischen Energiespeichers (6) zu regeln.

7. Strukturbauteil (1) nach einem der Ansprüche 1 bis 6, wobei die Steuerungseinrichtung (5) als Mikrocontroller in das Faserverbundlaminat (2) integriert ist.

8. Strukturbauteil (1) nach einem der Ansprüche 1 bis 7, wobei das Faserverbundlaminat (2) mehrere strukturell stabilisierende Faserverstärkungslagen (7) umfasst.

9. Befestigungsanordnung (10) für ein Fahrzeug, insbesondere ein Luft- oder Raumfahrzeug (100), mit zwei Strukturbauteilen (1) nach einem der Ansprüche 1 bis 8, wobei die Leistungsübertragungslagen (3) der Strukturbauteile (1) derart relativ zueinander angeordnet und ausgebildet sind, dass elektrische Energie über die Leistungsübertragungslagen (3) zwischen den Strukturbauteilen (1) übertragbar ist.

10. Befestigungsanordnung (10) nach Anspruch 9, wobei die zwei Strukturbauteile (1) stoffschlüssig im Bereich der Leistungsübertragungslagen (3) aneinander gefügt sind.

11. Luft- oder Raumfahrzeug (100) mit einem Strukturbauteil (1) nach einem der Ansprüche 1 bis 8 oder einer Befestigungsanordnung (10) nach Anspruch 9 oder 10.

## Claims

1. Structural component (1) for a vehicle, in particular an aircraft or spacecraft (100), wherein the structural component (1) has a fiber composite laminate (2), which comprises:
a power transmission layer (3), which is designed to transmit electrical energy wirelessly by means of a to transmit alternating electromagnetic fields; and
two current conduction layers (4), which electrically contact the power transmission layer (3);
wherein the structural component (1) further comprises:
a control device (5), which is electrically coupled to the power transmission layer (3) via the current conduction layers (4) and is designed to regulate a transmission of electrical energy through the power transmission layer (3), thereby **characterized in that** the power transmission layer (3) is integrated directly into the fiber composite laminate (2).

2. Structural component (1) according to claim 1, further comprising: an electrical energy storage (6) which is electrically coupled to the power transmission layer (3) and is designed to store electrical energy in a rechargeable manner.

3. Structural component (1) according to claim 2, wherein the electrical energy storage (6) is designed to receive electrical energy from the power transmission layer (3) and to provide stored electrical energy for the power transmission layer (3) as required.

4. Structural component (1) according to claim 2 or 3, wherein the electrical energy storage (6) is integrated into the fiber composite laminate (2) as a structural energy storage.

5. Structural component (1) according to claim 4, wherein the electrical energy storage (6) comprises a multi-layer electrochemical fiber composite battery, which is manufactured as a component of the fiber composite laminate (2).

6. Structural component (1) according to one of claims 2 to 5, wherein the control device (5) is designed to regulate charging and discharging of the electrical energy storage (6).

7. Structural component (1) according to one of claims 1 to 6, wherein the control device (5) is integrated as a microcontroller in the fiber composite laminate (2).

8. Structural component (1) according to one of claims 1 to 7, wherein the fiber composite laminate (2) comprises a plurality of structurally stabilizing fiber reinforcement layers (7).

9. Fastening arrangement (10) for a vehicle, in particular an aircraft or spacecraft (100), with two structural components (1) according to one of claims 1 to 8, wherein the power transmission layers (3) of the structural components (1) are arranged and designed relative to one another in this way that electrical energy can be transferred between the structural components (1) via the power transmission layers (3).

10. Fastening arrangement (10) according to claim 9, wherein the two structural components (1) are joined together in a materially bonded manner in the area of the power transmission layers (3).

11. Aircraft or spacecraft (100) with a structural component (1) according to one of claims 1 to 8 or a fastening arrangement (10) according to claim 9 or 10.

## Revendications

1. Composant structurel (1) pour un véhicule, en particulier un avion ou un engin spatial (100), dans lequel le composant structurel (1) présente un stratifié composite de fibres (2), qui comprend :
une couche de transmission de puissance (3) qui est conçue pour transmettre de l'énergie électrique sans fil au moyen d'un champ électromagnétique alternatif; et
deux couches de conduction de courant (4), qui entrent électriquement en contact avec la couche de transmission de puissance (3) ;
dans lequel le composant structurel (1) comprend en outre :
un dispositif de commande (5) qui est couplé électriquement à la couche de transmission de puissance (3) via les couches conductrices de courant (4) et qui est conçu pour réguler une transmission d'énergie électrique à travers la couche de transmission de puissance (3), **caractérisé en ce que** la couche de transmission de puissance (3) est intégrée directement dans le stratifié composite fibreux (2).

2. Composant structurel (1) selon la revendication 1, comprenant en outre : un stockage d'énergie électrique (6) qui est couplé électriquement à la couche de transmission de puissance (3) et est conçu pour stocker de l'énergie électrique de manière rechargeable.

3. Composant structurel (1) selon la revendication 2, dans lequel le stockage d'énergie électrique (6) est conçu pour recevoir de l'énergie électrique de la couche de transmission de puissance (3) et pour fournir de l'énergie électrique stockée pour la couche de transmission de puissance (3) selon les besoins.

4. Composant structurel (1) selon la revendication 2 ou 3, dans lequel l'accumulateur d'énergie électrique (6) est intégré dans le stratifié composite de fibres (2) en tant qu'accumulateur d'énergie structurel.

5. Composant structurel (1) selon la revendication 4, dans lequel le stockage d'énergie électrique (6) comprend une batterie composite à fibres électrochimiques multicouches, qui est fabriquée en tant que composant du stratifié composite à fibres (2).

6. Composant structurel (1) selon l'une des revendications 2 à 5, dans lequel le dispositif de commande (5) est conçu pour réguler la charge et la décharge de l'accumulateur d'énergie électrique (6).

7. Composant structurel (1) selon l'une des revendications 1 à 6, dans lequel le dispositif de commande (5) est intégré en tant que microcontrôleur dans le stratifié composite fibreux (2).

8. Composant structurel (1) selon l'une des revendications 1 à 7, dans lequel le stratifié composite fibreux (2) comprend une pluralité de couches de renforcement fibreux (7) structurellement stabilisantes.

9. Dispositif de fixation (10) pour un véhicule, en particulier un avion ou un engin spatial (100), avec deux composants structurels (1) selon l'une des revendications 1 à 8, dans lequel les couches de transmission de puissance (3) des composants structurels (1) sont disposés et conçus les uns par rapport aux autres de manière à ce que l'énergie électrique puisse être transférée entre les composants structurels (1) via les couches de transmission de puissance (3).

10. Dispositif de fixation (10) selon la revendication 9, dans lequel les deux composant structurels (1) sont reliés ensemble par liaison matérielle dans la zone des couches de transmission de puissance (3).

11. Aéronef ou engin spatial (100) avec un composant structurel (1) selon l'une des revendications 1 à 8 ou un dispositif de fixation (10) selon la revendication 9 ou 10.
